# FASCICULE DE BREVET EUROPEEN

(11) **EP 0 420 732 B1**
(45) Date de publication et mention de la délivrance du brevet: **18.11.1993**
(21) Numéro de dépôt: 90402624.2
(22) Date de dépôt: 24.09.1990
(51) Int. Cl.: A01G 25/02

(54) **Appareillage d'irrigation ponctuelle à dérivations de raccord**
Tropfenbewässerungsvorrichtung mit Abzweigverbindungen
Trickle irrigation device with branch couplings

(30) Priorité: 29.09.1989 FR 8912742
(43) Date de publication de la demande: 03.04.1991
(73) Titulaire: HUTCHINSON S.A. une Société Anonyme dotée d'un Conseil de Surveillance et d'un Directoire, F-75008 Paris (FR)
(72) Inventeur: Quignard, René Jacques, F-38120 St. Egreve (FR); Garcia, Jean, F-38850 Charavines (FR)
(74) Mandataire: Orès, Bernard

(56) Documents cités:
- EP-A- 0 002 336
- EP-A- 0 063 089
- FR-A- 2 257 053
- US-A- 3 361 363

## Description

La présente invention a trait aux appareillages utilisés pour la mise en oeuvre des systèmes d'irrigation du sol connus sous les termes d'"irrigation ponctuelle", "irrigation localisée" ou encore "irrigation goutte à goutte" dans lesquels l'eau est amenée au(x) point(s) d'utilisation souhaité(s) en très petites quantités afin d'obtenir l'humidification optimale avec la consommation d'eau minimale. Les appareillages utilisés à cet effet sont généralement de structure complexe, et partant coûteuse, d'une part, et sont d'une utilisation très spécifique, d'autre part, en raison du fait que les espacements des orifices de distribution d'eau sont généralement fixes.

Pour obvier à ces inconvénients, il a été proposé dans la Demande de Brevet FR-81 07317, déposée le 09 Avril 1981, qui est le document de priorité du EP-A-0 063 089 et qui divulgue le préambule de la revendication 1, un appareillage composé d'un tuyau principal d'alimentation en une matière élastiquement déformable et d'une série de dérivations propres à être branchées par simple enfoncement à force à n'importe quel niveau d'au moins une partie longitudinale du tuyau principal de section transversale particulièrement adaptée, de sorte que lorsqu'une dérivation est retirée, les forces de compression élastiques de la matière constituant le tuyau principal referment à étanchéité le passage ouvert par l'enfoncement de la dérivation.

Si cet appareillage donne effectivement satisfaction, il met en oeuvre pour son utilisation des aiguilles métalliques formant l'extrémité des dérivations branchées sur le tuyau principal. Il en résulte parfois des défauts d'étanchéité de l'appareil au cours de son utilisation et au niveau des implantations des dérivations en raison de l'échauffement des aiguilles métalliques (notamment dans les périodes de sécheresse où ces appareillages sont le plus utilisés) et qui entraîne une détérioration de l'élasticité de la matière constitutive du tuyau principal au niveau des perforations, en particulier lorsque cette matière est un élastomère du type caoutchoutique.

C'est un but général de l'invention de fournir un appareillage d'irrigation du type précité qui pallie les inconvénients des dispositifs connus et dont l'étanchéité, en particulier, ne s'altère pas au cours des utilisations successives.

A cet effet, un appareillage d'irrigation selon l'invention comportant en combinaison un tuyau principal d'alimentation en eau réalisé en une matière élastiquement déformable et au moins une dérivation comportant une aiguille à extrémité acérée suffisamment rigide pour être branchée dans le tuyau principal par enfoncement à force provoquant la traversée dudit tuyau, est caractérisé en ce que ledit tuyau principal comporte sur une partie de la surface interne de sa paroi une surépaisseur en un matériau caoutchoutique élastiquement déformable, de dureté très inférieure à celle de la matière constitutive de la paroi du tuyau et doué de propriétés d'auto-obturation.

Dans une forme de réalisation préférée de l'invention, le matériau constitutif de ladite surépaisseur est en caoutchouc bromobutyle.

Dans un mode d'exécution d'une telle réalisation préférée, le tuyau principal présente, en l'absence de pression interne, une section droite quelque peu en forme de rectangle à coins arrondis dont l'un des petits côtés est garni sur sa face interne de ladite surépaisseur et dont la face externe du même côté présente une légère dépression permettant de repérer la zone longiligne du tuyau en laquelle doivent être enfoncée(s) la ou les aiguille(s) de la ou des dérivation(s).

Selon une autre caractéristique de l'invention, cette dépression est bordée, le long du tuyau et au voisinage des bords longitudinaux de la dépression , par deux nervures parallèles symétriques par rapport au plan moyen longitudinal du tuyau et qui contribuent au repérage de la zone où peuvent être enfoncées les aiguilles des dérivations.

Dans une forme de réalisation avantageuse, c'est l'ensemble du tuyau principal qui est à structure symétrique par rapport au plan longitudinal moyen du tuyau, de sorte que ladite surépaisseur est aussi symétrique par rapport audit plan moyen.

Selon une autre caractéristique de l'invention, la surépaisseur présente en section transversale, et dans la condition non sollicitée du tuyau, c'est-à-dire avant mise sous pression, sensiblement la forme d'une calotte sphérique.

Dans une forme de réalisation particulièrement préférée de l'invention, le tuyau est en un caoutchouc du type EPDM, d'une dureté d'environ 70 Shore A et la surépaisseur est en caoutchouc bromobutyle d'une dureté d'environ 40 Shore A, les deux matériaux ainsi que, le cas échéant, les nervures externes limitant la dépression de repérage de la zone d'introduction des aiguilles, étant coextrudés pour la fabrication du tuyau.

D'autres caractéristiques et avantages de l'invention apparaîtront de la description qui suit, faite à titre d'exemple et en référence au dessin annexé dans lequel :
- la figure 1 est une vue du tuyau principal d'un appareillage d'irrigation suivant l'invention en coupe transversale par un plan perpendiculaire à l'axe du tuyau dans sa configuration précédant la mise sous pression ;
- la figure 2 est une vue en coupe transversale suivant le même plan que celui de la figure 1, mais dans sa configuration d'utilisation.

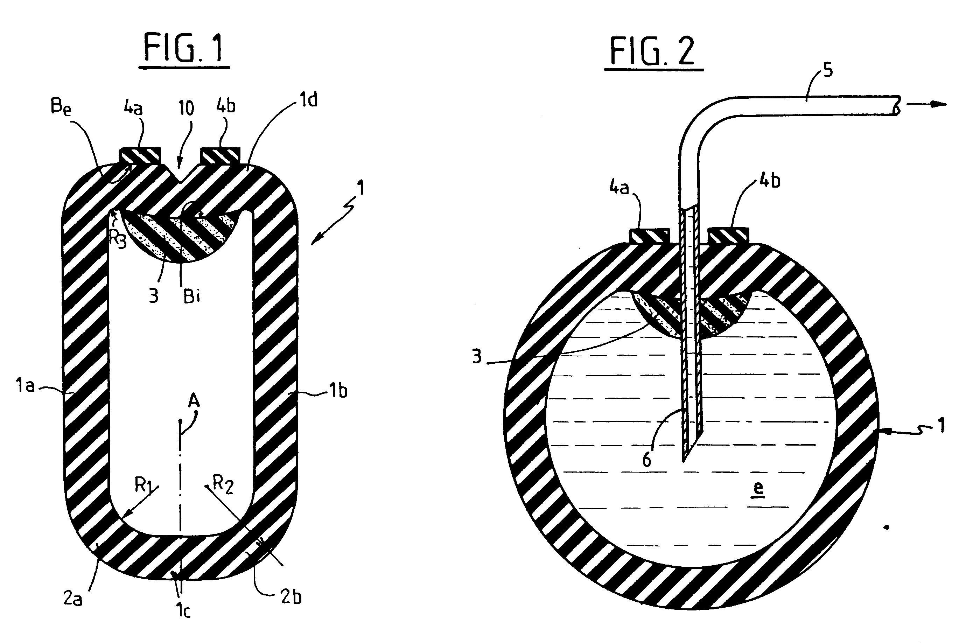

On se réfère d'abord à la figure 1 qui montre un tuyau principal 1 en matériau élastiquement déformable par exemple en caoutchouc EPDM relativement dur (70 Shore A) conformé de manière à présenter, comme montré sur la figure qui représente le tuyau avant sa mise sous pression, une section de forme générale sensiblement rectangulaire à coins arrondis avec deux grands côtés 1a, 1b, un petit côté 1c de même épaisseur constante que celle des grands côtés, raccordé à ces derniers par des zones de liaison 2a, 2b, arrondies à relativement grands rayons de courbure intérieur et extérieur, R1, R2 respectivement. Un petit côté 1d, de même longueur que le côté 1c et relié aux grands côtés 1a, 1b par des parties arrondies de rayon de courbure extérieur voisin de R1 mais de rayon de courbure intérieur R3 beaucoup plus faible, complète la section droite du tuyau.

Comme bien visible sur la figure 1, le côté 1d qui définit pour le tuyau dans sa condition non opératoire une surface extérieure Be sensiblement plane présente une dépression ou rainure 10 à section droite sensiblement en forme de V, tandis que la face interne Bi du tuyau dans la zone correspondant au bord 1d est légèrement incurvée avec une convexité tournée vers l'intérieur du tuyau.

Sur sa surface intérieure Bi le tuyau présente une surépaisseur ou bossage 3 à surface extérieure sensiblement hémisphérique en une matière caoutchoutique souple, très élastique, beaucoup moins dure que celle du tuyau proprement dit et qui a la propriété de conserver sa souplesse sur une large gamme de températures, de ne pas se durcir ni se craqueler sous l'effet de la chaleur, d'un froid intense, ou au cours du temps et d'être totalement inerte chimiquement et physiquement, c'est-à-dire insensible aux attaques par les impuretés minérales ou organiques de l'eau qui ne peuvent ni l'attaquer ni se fixer sur elle.

Une matière particulièrement bien appropriée et ayant donné de bons résultats est constituée par du caoutchouc bromobutyle lequel permet d'assurer une étanchéité satisfaisante de l'appareillage même lorsque, à la suite d'utilisations répétées, le matériau constitutif du tuyau 1 a perdu certaines de ses caractéristiques d'étanchéité dans la zone traversée de façon répétée par les aiguilles métalliques d'extrémités des dérivations.

Pour que lesdites aiguilles soient alors enfoncées dans le tuyau principal précisément dans les parties où il est garni sur sa surface intérieure de la surépaisseur 3, on prévoit de disposer sur sa surface extérieure correspondant au côté 1d, deux nervures longitudinales, 4a, 4b, disposées symétriquement de part et d'autre du plan longitudinal de symétrie A du tuyau. Les nervures 4a et 4b peuvent également être réalisées en matériau caoutchoutique du même type ou d'un type différent de celui constitutif du tuyau 1 ou de la surépaisseur 3.

Dans une forme de réalisation préférée de l'invention, elles sont avantageusement teintées dans la masse pour mieux les distinguer du reste du tuyau, lequel est généralement de couleur noire, facilitant encore ainsi le repérage de la zone d'enfoncement des aiguilles de dérivation.

Une telle aiguille 6 formant l'extrémité d'une dérivation tubulaire 5 est représentée sur la figure 2 qui montre l'appareillage en configuration d'utilisation avec une section droite du tuyau 1 sensiblement circulaire sous l'effet de la pression de l'eau e dans le tuyau 1 et qui doit être distribuée par les dérivations 5.

Lorsque l'aiguille métallique 6 de la dérivation 5 est retirée, la zone du tuyau traversée par ladite aiguille reprend sa condition initiale, et s'oppose à toute sortie d'eau au droit de la zone préalablement traversée par un effet d'auto-obturation.

A celui-ci contribue efficacement la surépaisseur 3 dont est garni intérieurement le tuyau en raison de sa grande souplesse et de sa grande élasticité, ces caractéristiques suppléant même, le cas échéant, à une relative perte d'étanchéité du tuyau 1 proprement dit, par exemple en raison du vieillissement de celui-ci.

Dans une forme de réalisation ayant donné satisfaction, en particulier en ce qui concerne sa possibilité d'utilisation prolongée, au cours de plusieurs saisons ou campagnes d'irrigation, le tube 1 était réalisé en un caoutchouc EPDM à section droite en forme de rectangle à coins arrondis dont la longueur des grands côtés était de l'ordre de 15 mm, la longueur des petits côtés de l'ordre de 8 mm, l'épaisseur de l'ordre de 1,5 mm, les rayons de courbure R1 et R2 ayant des valeurs respectivement de 1,7 et 3,2 mm tandis que l'épaisseur du bossage 3 en caoutchouc bromobutyle était de l'ordre de 2 mm au droit de la rainure 10.

## Revendications

1. Appareillage d'irrigation comportant en combinaison un tuyau principal (1) d'alimentation en eau réalisé en une matière élastiquement déformable et au moins une dérivation (5) comportant une aiguille (6) à extrémité acérée suffissamment rigide pour être branchée dans le tuyau principal par enfoncement à force provoquant la traversée dudit tuyau, caractérisé en ce que ledit tuyau principal (1) comporte sur une partie de la surface interne de sa paroi une surépaisseur (3) en un matériau caoutchoutique élastiquement déformable, de dureté très inférieure à celle de la matière constitutive de la paroi du tuyau (1) et propre à obturer des orifices réalisés dans sa masse.

2. Appareillage d'irrigation selon la revendication 1, caractérisé en ce que le matériau constitutif de ladite surépaisseur est en caoutchouc bromobutyle.

3. Appareillage d'irrigation selon l'une quelconque des revendications précédentes, caractérisé en ce que ledit tuyau principal (1) présente, en l'absence de pression interne, une section droite en forme de rectangle à coins arrondis dont l'un des petits côtés (1d) est garni sur sa face interne de ladite surépaisseur (3) et dont la face externe du même côté présente une légère dépression (10) permettant de repérer la zone longiligne du tuyau en laquelle doivent être enfoncées la ou les aiguille(s) (6) de la ou des dérivation(s) (5).

4. Appareillage d'irrigation selon l'une quelconque des revendications précédentes, caractérisé en ce que la dépression (10) est bordée le long du tuyau (1) et au voisinage des bords longitudinaux de la dépression (10) par deux nervures (4a, 4b) parallèles symétriques par rapport au plan moyen longitudinal du tuyau qui contribuent au repérage de la zone où peuvent être enfoncées les aiguilles (6) des dérivations (5).

5. Appareillage d'irrigation selon l'une quelconque des revendications précédentes, caractérisé en ce que l'ensemble du tuyau principal (1) est à structure symétrique par rapport au plan longitudinal moyen du tuyau, de sorte que ladite surépaisseur (3) est aussi symétrique par rapport audit plan moyen.

6. Appareillage d'irrigation suivant l'une quelconque des revendications précédentes, caractérisé en ce que la surépaisseur (3) présente, en section transversale et dans la condition non sollicitée du tuyau (1), c'est-à-dire avant mise sous pression, sensiblement la forme d'une calotte sphérique.

7. Appareillage d'irrigation suivant l'une quelconque des revendications précédentes, caractérisé en ce que le tuyau (1) est en un caoutchouc EPDM d'une dureté d'environ 70 Shore A et en ce que la surépaisseur (3) est en un caoutchouc bromobutyle d'une dureté d'environ 40 Shore A.

8. Appareillage d'irrigation suivant l'une quelconque des revendications précédentes, caractérisé en ce que le tuyau (1) et la surépaisseur (3) sont coextrudés.

9. Appareillage d'irrigation suivant l'une quelconque des revendications précédentes, caractérisé en ce que le tuyau (1) est à section droite en forme de rectangle à coins arrondis dont la longueur des petits côtés est de l'ordre de 8 mm, l'épaisseur de l'ordre de 1,5 mm, les rayons de courbure (R1 et R2) de l'ordre de 1,7 et 3, 2 mm, respectivement, et l'épaisseur de la surépaisseur (3) 2 mm au droit de la rainure (10).

## Patentansprüche

1. Bewässerungsvorrichtung mit einem Hauptschlauch (1) zur Wesserzuführung aus einem elastisch verformbaren Material und mit mindestens einer Ableitung (5), die eine Nadel (6) mit einem spitzen Ende umfaßt, welche starr genug ist, um an den Hauptschlauch durch einen Druck angeschlossen zu werden, der das Durchstoßen des Schlauches bewirkt, dadurch gekennzeichnet, daß der besagte Hauptschlauch (1) auf einem Teil seiner inneren Oberfläche seiner Wand eine Überdicke (3) aus einem gummiartigen elastisch verformbaren Material aufweist, dessen Härte wesentlich kleiner als die der Wandung des Schlauches (1) ist, und welches geeignet ist, die in seinem Volumen geschaffenen Öffnungen zu verschließen.

2. Vorrichtung nach Anspruch 1, dadurch gekennzeichnet, daß das die besagte Überdicke bildende Material aus Brombutyl-Kautschuk besteht.

3. Vorrichtung nach einem der vorstehenden Ansprüche, dadurch gekennzeichnet, daß der besagte Hauptschlauch (1) in Abwesenheit von innerem Druck einen Querschnitt in Form eines Rechtecks mit abgerundeten Ecken aufweist, von dem eine der kleinen Seiten (1d) auf seiner Innenseite die besagte Überdicke (3) aufweist und dessen äußere Oberfläche der selben Seite eine leichte Vertiefung aufweist, um diesen länglichen Bereich des Schlauches auffinden zu können, in den die Nadel (n) (6) der Ableitungen eingedrückt werden.

4. Vorrichtung nach einem der vorstehenden Ansprüche, dadurch gekennzeichnet, da die Vertiefung (10) entlang des Schlauches (1) und benachbart zu den länglichen Rändern der Vertiefung von zwei parallelen zu der Längs-Mittelebene des Schlauches symmetrischen Rippen (4a, 4b) begrentz wird, die dem Auffinden des Bereiches dienen, in den die Nadeln (6) der Ableitungen (5) eingedrückt werden können.

5. Vorrichtung nach einem der vorstehenden Ansprüche, dadurch gekennzeichnet, daß die Gesmamtheit des Hauptschlauches (1) bezüglich der longitudinalen Ebene des Schlauches symmetrisch aufgebaut ist, so daß die besagte Überdicke (3) bezüglich dieser Mittelebene auch symmetrisch ist.

6. Vorrichtung nach einem der vorstehenden Ansprüche, dadurch gekennzeichnet, daß die Überdicke (3) im Querschnitt und unter der Bedingung des nicht beaufschlagten Schlauches (1), d.h. vor einer Druckausübung, im wesentlichen die Form einer Kugelkappe aufweist.

7. Vorrichtung nach einem der vorstehenden Ansprüche, dadurch gekennzeichnet, daß der Schlauch (1) aus einem EPDM-Gummi mit einer Härte von ungefähr 70 Shore A und die Überdicke (3) aus einem Brombutyl-Gummi mit einer Härte von ungefähr 40 Shore A besteht.

8. Vorrichtung nach einem der vorstehenden Ansprüche, dadurch gekennzeichnet, daß der Schlauch (1) und die Überdicke (3) zusammen extrudiert sind.

9. Vorrichtung nach einem der vorstehenden Ansprüche, dadurch gekennzeichnet, daß der Schlauch (1) im Querschnitt die Gestalt eines Rechtecks mit abgerundeten Kanten aufweist, dessen Länge entlang den kleinen Seiten eine Größenordnung von 8 Millimetern, eine Dicke eine Größenordnung von 1,5 Millimetern, Krümmungsradien (R1 und R2) in der Größenordnung von jeweils 1,7 bzw. 3,2 Millimeter und eine Dicke der überdicke (3) von zwei Millimetern am Ort der Rinne (10) aufweist.

## Claims

1. Irrigation apparatus comprising in combination a main water supply pipe (1) made from a resiliently deformable material and at least one branch pipe (5) comprising a needle (6) with a sharp end sufficiently rigid to be connected to the main pipe by forcing through said pipe, characterized in that said main pipe (1) has on a part of the internal surface of its wall an extra thickness (3) of a rubbery resiliently deformable material of a hardness very much less than that of the material forming the wall of the pipe (1) and capable of closing the orifices formed in its mass.

2. Irrigation apparatus according to claim 1, characterized in that the material forming said extra thickness is made from bromobutyl rubber.

3. Irrigation apparatus according to any one of the preceding claims, characterized in that said main pipe (1) has, in the absence of internal pressure, a cross section in the form of a rectangle with rounded corners one of the small sides (1d) of which has said extra thickness (3) on its internal face and the external face of which on the same side has a slight depression for locating the linear longitudinal zone of the pipe in which the needle or needles (6) of the branch pipe or pipes (5) are to be driven.

4. Irrigation apparatus according to any one of the preceding claims, characterized in that the depression (10) is bordered along the pipe (1) and in the vicinity of the longitudinal edges of the depression by two parallel ribs (4a, 4b) which are symmetrical with respect to the mean longitudinal plane of the pipe which contributes to locating the zone where the needles (6) of the branch pipes (5) can be driven in.

5. Irrigation apparatus according to any one of the preceding claims, characterized in that the whole of the main pipe (1) has a symmetrical structure with respect to the mean longitudinal plane of the pipe, so that said extra thickness (3) is also symmetrical with respect to said mean plane.

6. Irrigation apparatus according to any one of the preceding claims, characterized in that the extra thickness (3) has, in cross section and in the unstressed condition of the pipe (1), i.e. before being pressurized, substantially the shape of a spherical skull cap.

7. Irrigation apparatus according to any one of the preceding claims, characterized in that the pipe (1) is made from an EPDM rubber having a hardness of about 70 Shore A and in that the extra thickness (3) is made from a bromobutyl rubber with a hardness of about 40 Shore A.

8. Irrigation apparatus according to any one of the preceding claims, characterized in that the pipe (1) and the extra thickness (3) are coextruded.

9. Irrigation apparatus according to any one of the preceding claims, characterized in that the pipe (1) has a cross section in the form of a rectangle with rounded corners in which the length of the small sides is about 8 mm, the thickness about 1.5 mm, the radii of curvature (R1 and R2) about 1.7 and 3.2 mm respectively and the thickness of the extra thickness (3) 2 mm in line with the groove (10).
